# EUROPÄISCHE PATENTSCHRIFT

(11) **EP 3 097 135 B1**
(45) Veröffentlichungstag und Bekanntmachung des Hinweises auf die Patenterteilung: **18.08.2021**
(21) Anmeldenummer: 15702662.6
(22) Anmeldetag: 21.01.2015
(51) Int. Cl.: C08G 64/14, C08G 64/24

(54) **VERFAHREN ZUR HERSTELLUNG VON POLYCARBONAT NACH DEM PHASENGRENZFLÄCHENVERFAHREN**
METHOD OF MANUFACTURING POLYCARBONATE USING THE PHASE BOUNDARY METHOD
PROCÉDÉ DESTINÉ À LA FABRICATION DE POLYCARBONATE SELON LE PROCÉDÉ DE SURFACES DE LIMITE DE PHASES

(30) Priorität: 24.01.2014 EP 14152441
(43) Veröffentlichungstag der Anmeldung: 30.11.2016
(73) Patentinhaber: Covestro Intellectual Property GmbH & Co. KG, 51373 Leverkusen (DE)
(72) Erfinder: KAUTH, Hermann, 47803 Krefeld (DE); LAUE, Stephan, Houston, Texas 77006 (US); HEIJL, Jan, B-9160 Lokeren (BE); BACHMANN, Rolf, 51469 Bergisch Gladbach (DE); BRUYNSEELS, Franky, B-9170 Sint Gillis-Waas (BE); DE BOCK, Maarten, B-2920 Kalmthout (BE); VANDEN EYNDE, Johan, B-9052 Zwijnaarde (BE); KANJANASANTISAK, Somchai, Rayong 21150 (TH)
(74) Vertreter: Levpat
(86) Internationale Anmeldenummer: PCT/EP2015/051077
(87) Internationale Veröffentlichungsnummer: WO 2015/110447

(56) Entgegenhaltungen:
- EP-A1- 2 098 553
- DE-A1-102008 008 841

## Beschreibung

Die vorliegende Erfindung betrifft ein effizientes kontinuierliches Verfahren zur Herstellung von Polycarbonat nach dem Phasengrenzflächenverfahren.

Die Polycarbonatherstellung nach dem Phasengrenzflächenverfahren ist bereits von Schnell, "Chemistry and Physics of Polycarbonates", Polymer Reviews, Volume 9, Interscience Publishers, New York, London, Sydney 1964, S. 33-70; D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 18, (1980)"; S. 75-90, D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692 und schließlich von Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 beschrieben worden.

Des Weiteren wird auch in EP-A 0 517 044 oder EP-A 520 272 das Phasengrenzflächenverfahren zur Herstellung von Polycarbonat beschrieben.

Zur Herstellung von Polycarbonat nach dem Phasengrenzflächenverfahren erfolgt die Phosgenierung eines in wässrig-alkalischer Lösung oder Suspension vorgelegten Dinatriumsalzes eines Bisphenols oder eines Gemisches verschiedener Bisphenole in Gegenwart eines inerten organischen Lösungsmittels oder Lösungsmittelgemisches, welches neben der wässrigen eine zweite organische Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert, wobei das Molekulargewicht durch geeignete Kettenabbrecher (monofunktionelle Phenole) kontrolliert werden kann. Die organische Phase wird schließlich abgetrennt und das Polycarbonat durch verschiedene Aufarbeitungsschritte daraus isoliert.

Kontinuierliche Verfahren zur Herstellung von Kondensaten unter Verwendung von Phosgen - beispielsweise die Herstellung von aromatischen Polycarbonaten, oder Polyestercarbonaten oder ihrer Oligomeren - nach dem Zweiphasen-Grenzflächenverfahren haben in der Regel den Nachteil, dass zur Beschleunigung der Reaktion und/oder Verbesserung der Phasentrennung mehr Phosgen eingesetzt werden muss, als für die Produktbilanz notwendig ist. Der Phosgen-Überschuss wird dann in der Synthese in Form von Nebenprodukten - beispielsweise zusätzlichem Kochsalz oder Alkalicarbonat-Verbindungen - abgebaut. Typischerweise werden für das kontinuierliche Zweiphasen-Grenzflächenverfahren zur Herstellung von aromatischen Polycarbonaten Phosgenüberschüsse um die 20 Mol-% bezogen auf das zugegebene Diphenolat eingesetzt (vgl. D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692).

Bei einer Reduktion des Phosgenüberschusses treten unerwünschte Nebeneffekte wie eine schlechte Trennung der Dispersion nach dem letzten Reaktionsschritt, und damit erhöhte Wassergehalte in der organischen Lösung bzw. erhöhte Restmonomer oder Kettenabbrechergehalte im Abwasser auf. Verschiedene Methoden der Reduktion des Phosgenüberschusses werden in der Literatur diskutiert.

Aus der DE-A 2 725 967 geht die Lehre hervor, dass es für die Phosgenausbeute eines Verfahrens günstig ist, wässrige und organische Phase, die Phosgen enthält, zunächst in einem Rohr zusammenzuführen und dann in einen Reaktor vom Tanktyp einzuführen. Die Verweilzeit in diesem Rohr sollte zwischen 0,5 und 15 Sekunden betragen. Der Phosgenüberschuss der Reaktion beträgt mehr als 10 Mol-%. Dieser reduzierte Phosgenüberschuss erfordert ein ungünstiges Phasenverhältnis von organischer Phase (d.h. Öl) zu Wasser, um nach Abschluss der Reaktion eine effektive Trennung der beiden Phasen zu erreichen. Nachteilig ist zudem die relativ hohe Verweilzeit für die Phosgenierung.

Gemäß einem aus EP-A-304 691 bekannten kontinuierlichen Phasengrenzflächenverfahren zur Herstellung von Polycarbonaten wird eine wässrige Phase aus Diphenolen und der gerade notwendigen Menge Alkalihydroxid mit einer Phosgen enthaltenen organischen Phase in einem Rohr unter Verwendung eines statischen Mischers zusammengeführt. Der Phosgenüberschuss ist mit 20 bis 100 Mol-% sehr hoch und die Verweilzeit im Reaktionsrohr für den ersten Reaktionsschritt liegt bei 10 bis 75 s. Mit diesem Verfahren können lediglich Prepolymere mit einem Molekulargewicht von 4000 bis 12000 g/mol hergestellt werden.

EP 0 517 044 A2 beschreibt die Reduktion des Phosgenüberschusses mittels einer Ringlochdüse und eines Strömungsrohrs, wobei gerade so viel Natronlauge verwendet wird, dass BPA noch gelöst bleibt. Dieses Verfahren erfordert eine aufwändige Regelung mit einer Messung der Chlorkohlensäureester-Gruppen mittels ATR-Kristall und einer geregelten Nachdosierung von Natronlauge um eine Übersäuern der Reaktionslösung zu verhindern. Weiterhin erfordert diese Reaktion ein derartiges Phasenverhältnis von Öl zu Wasser, dass sich eine Wasser-in-Öl-Dispersion bildet (Phasenverhältns Öl / Wasser größer 1). Die Verweilzeit im Strömungsrohr beträgt mindestens mehrere Sekunden.

Aus der EP 0 520 272 B1 geht hervor, dass ein geringer Phosgenüberschuss durch Split des Stroms der BPA-Lösung erreicht werden kann. Hierbei wird über eine Düse ein Teil der BPA-Lösung mit der Phosgenlösung gemischt, so dass in diesem Schritt ein Phosgenüberschuss von mindestens 20 Mol-% eingesetzt wird. Die Mischung reagiert dann in einem Strömungsrohr mit einer Mindestverweilzeit von 3 s weiter. Auch hier wird gefordert, dass die Dispersion eine Wasser in Öl-Dispersion ist. Der Nachteil des Verfahrens besteht unter anderem auch in dem erhöhten Aufwand der Dosierung eines zweiten BPA-Stroms.

EP 2 098 553 offenbart ein kontinuierliches Verfahren zur Herstellung von Polycarbonat nach dem Phasengrenzflächenverfahren, bei dem ein Dispergator zur Mischung der organischen Phase und der wässrigen Phase eingesetzt wird und die Mischung anschließend in einem Reaktor mit einer Verweilzeit von weniger als 0,5 s umgesetzt wird. Im Hinblick auf die Vermeidung von Nebenreaktionen und die Reduzierung des Phosgenüberschusses besteht jedoch auch bei diesem Verfahren noch Verbesserungsbedarf.

Der vorliegenden Erfindung lag demnach die Aufgabe zugrunde, ein solches Verfahren bereitzustellen, bei dem mit einem möglichst reduzierten Phosgenüberschuss gearbeitet werden kann, eine effiziente nachträgliche Trennung der beiden Phasen ermöglicht wird und Nebenreaktionen vermieden werden.

Überraschend wurde gefunden, dass in einem kontinuierlichen Verfahren zur Herstellung von Polycarbonat mittels Phasengrenzflächenverfahren eine besondere Kombination von Reaktionsparametern sehr wichtig ist zur Vermeidung von Nebenreaktionen aller Art:

Es ist bekannt, dass die Reaktionsmischung auf eine Temperatur von 45°C oder weniger abgekühlt werden muss, um Nebenreaktionen mit dem Katalysator weitestgehend zu vermeiden. Es wurde nun überraschend gefunden, dass eine erhöhte Temperatur im Reaktionssystem vor Zugabe des Katalysators kaum Auswirkungen auf die Bildung von Nebenprodukten hat. Demnach braucht die Kühlung erst kurz vor der Katalysatorzugabe erfolgen und die ersten Reaktionsschritte können bei höheren Temperaturen ausgeführt werden.

Daneben muss der pH-Werts des Systems sehr genau über das Verlauf der Reaktion kontrolliert werden. Freie OH- Ionen während der Phosgenierungsschritt leiten zu Nebenreaktionen, wie der Verseifung von Phosgen zu Carbonat-Salz. Es wurde nun gefunden, dass eine sehr genaue Mischung von 2,00 bis 2,05 Mol Natronlauge pro Mol Bisphenol die Bildung des Carbonat-Salzes am besten vermeidet. Während der Phase, in der Reste an freiem Phosgen anwesend sein können, darf daher keine weitere Alkalilauge dosiert werden. Es wurde gefunden, dass die Reaktionsmischung zur vollständigen Abreaktion der Phosgens einem Umpumpreaktor mit einem Verhältnis von Umpumprate zu Gesamtdurchströmung zwischen 5 und 15 zugeführt werden sollte. Es wurde ferner gefunden, dass während des Einbaus des Kettenabbrechers das Phasengleichgewicht der phenolischen Komponenten dann optimal vorliegt, wenn der pH-Wert zwischen 11,3 und 11,8 eingestellt ist. Wenn als Kettenabbrecher Phenol eingesetzt wird, sollte das Phenol in Form einer organischen Lösung mit einer Konzentration von 5 bis 40 Gew.-% zudosiert werden, um zu vermeiden dass Phenol in die wässrige Phase gezogen wird und nicht reagiert. Wenn als Kettenabbrecher p-tert-Butylphenol eingesetzt wird, sollte dieser für eine optimale Reaktion in Form einer organischen Lösung mit einer Konzentration von 2 bis 25 Gew.-% zudosiert werden.

Gegenstand der vorliegenden Erfindung ist daher ein Verfahren zur kontinuierlichen Herstellung von Polycarbonaten mit gewichtsmittleren Molekulargewichten M_{w} von 15000 - 200000 g/mol nach dem Phasengrenzflächenverfahrens aus wenigstens einem Dihydroxydiarylalkan, Phosgen und wenigstens einem Katalysator gegebenenfalls in Gegenwart wenigstens eines Kettenabbrechers und/oder Verzweigers, wobei
(a) eine Mischung aus einer organischen und einer wässrigen Phase erzeugt wird, indem in einem Dispergator kontinuierlich die organische Phase in die wässrige Phase oder die wässrige Phase in die organische Phase dispergiert wird, wobei die organische Phase wenigstens ein für das Polycarbonat geeignetes Lösungsmittel und zumindest einen Teil des Phosgens enthält und die wässrige Phase das oder die Dihydroxydiarylalkan(e), Wasser und 2,00 bis 2,05 Mol Alkalilauge pro Mol Dihydroxydiarylalkan(e) enthält,
(b) anschließend die Mischung in einem Reaktor mit einer Verweilzeit von weniger als 0,5 s umgesetzt wird,
(c) anschließend die Reaktionsmischung gegebenenfalls unter Zugabe weiterer Kettenabbrecher(n) in einem Umpumpreaktor mit einer Umpumprate von 5 bis 15 mal der Durchströmungsmenge redispergiert wird und weiterreagiert, und
(d) anschließend Alkalilauge und Kettenabbrecher zugegeben wird und weitere Aufkondensation in Gegenwart wenigstens eines Katalysators in wenigstens einem weiteren Reaktor erfolgt,
wobei in Schritt (d) die Reaktionstemperatur höchstens 45 °C beträgt und die wässrige Phase auf einen pH-Wert zwischen 11,3 und 11,8 eingestellt wird;
und wobei in den Schritten (b) und (c) keine Alkalilauge zugegeben wird.

Vorzugsweise erfolgt in Schritt (d) zunächst eine Zugabe von Alkalilauge und vorzugsweise Kettenabbrecher in einem ersten Reaktor und die Zugabe von Katalysator in einem zweiten Reaktor.

Bei der Dispergierung der organischen Phase in die wässrige Phase oder der wässrigen Phase in die organische Phase mittels Dispergator kann eine Öl-in-Wasser- oder eine Wasser-in-Öl-Dispersion erzeugt werden, wobei unter Öl die organische Phase zu verstehen ist. Bevorzugt wird bei der Dispergierung eine Öl-in-Wasser-Dispersion erzeugt. Vorzugsweise wird mittels des Dispergators kontinuierlich die organische Phase in die wässrige Phase dispergiert.

Definitionsgemäß handelt es sich bei einer Öl-in-Wasser-Dispersion um eine solche, bei der Wasser die äußere (kontinuierliche) und Öl die innere (dispergierte) Phase bildet, d.h. Öltröpfchen in Wasser verteilt sind. Bei einer Wasser-in-Öl-Dispersion handelt es sich folglich um eine solche, bei der Öl die äußere und Wasser die innere Phase bildet.

Die organische Phase kann das erforderliche Phosgen vor der Dispergierung bereits ganz oder teilweise enthalten. Bevorzugt enthält die organische Phase vor der Dispergierung bereits das gesamte erforderliche Phosgen inklusive des verwendeten Phosgenüberschusses.

Der Eintrag des Phosgens in die organische Phase kann gasförmig oder flüssig erfolgen. Der verwendete Überschuss an Phosgen, bezogen auf die Summe der eingesetzten Dihydroxydiarylalkane beträgt vorzugsweise höchstens 13 Mol.-%, besonders bevorzugt höchstens 11 Mol.-%, ganz besonders bevorzugt höchstens 10 Mol.-%, und insbesondere zwischen 5 und 10 Mol.-%.

Während der Phosgenierungsschritts (a) wird vorzugsweise möglichst wenig freie Alkalilauge zur Verfügung gestellt, um eine Verseifung des Phosgens zu Natriumcarbonat (d.h. einen Verlust an Phosgen) zu vermeiden. Erfindungsgemäß wird daher in Schritt (a) und 2,00 bis 2,05 Mol Alkalilauge pro Mol Dihydroxydiarylalkan eingesetzt und in den Schritten (b) und (c) keine Alkalilauge zugegeben. In Schritt (d) ist die Einstellung des pH Werts wichtig, um das im Rahmen dieser Erfindung ermittelte Gleichgewicht der phenolischen Komponenten optimal einzustellen. Erfindungsgemäß erfolgt die Nachdosierung von Alkalilauge und auch die Zugabe von Kettenabbrecher daher in Schritt (d), wobei vorzugsweise zuerst Kettenabbrecher und dann Alkalilauge zugegeben wird.

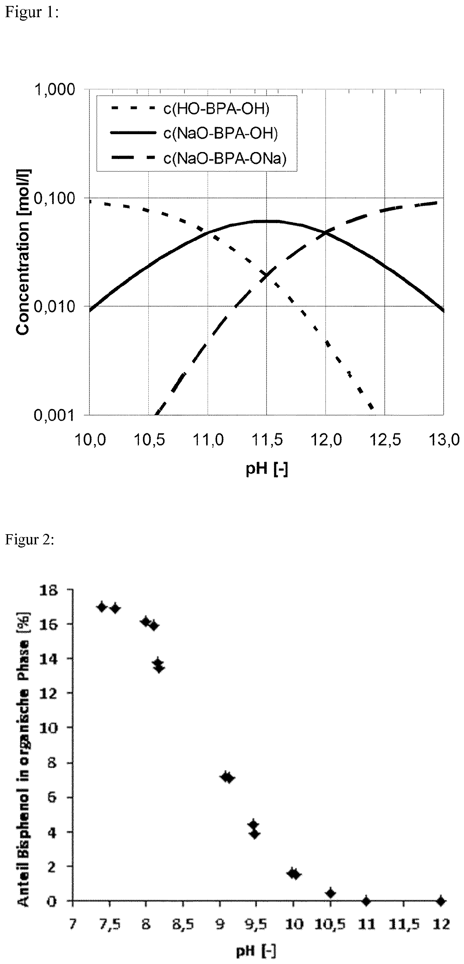

Als Beispiel wird in Figur 1 das Gleichgewicht zwischen Bisphenol A und seinen deprotonierten Varianten gezeigt. Aus diesen Säure-Base Gleichgewichten folgt eine Phasenverteilung, wobei die ionischen Komponenten sich bevorzugt in der wässrige Phase, und die ungeladene Komponenten in der Organische Phase befinden. Die Phasenverteilung in Abhängigkeit vom pH wird am Beispiel von Bisphenol-A in Figur 2 gezeigt (die angebenen Konzentrationen beziehen sich jeweils auf die in der organischen Phase gemessenen Werte).

Die Phosgendosierung erfolgt vor der Mischung mit der wässrigen Phase ganz oder teilweise direkt in die organische Phase. Etwaige Teilmengen Phosgen können auch vor der Dispergierung in die wässrigen Phase oder aber nach der Dispergierung in die Dispersion eindosiert werden. Weiterhin kann das Phosgen ganz oder teilweise in einen rückgeführten Teilstrom des Synthesegemisches aus beiden Phasen dosiert werden, wobei dieser Teilstrom vorzugsweise vor der Katalysatorzugabe rückgeführt wird. In einer anderen Ausführungsform werden die beschriebene wässrige Phase mit der das Phosgen enthaltenden organischen Phase gemischt und anschließend nach einer Verweilzeit von weniger als 5 Sekunden dem oben erwähnten rückgeführten Teilstrom zugesetzt oder aber die beiden Phasen, die beschriebene wässrige Phase mit der das Phosgen enthaltenden organischen Phase werden direkt in dem oben erwähnten rückgeführten Teilstrom gemischt. Besonders bevorzugt erfolgt die vollständige Phosgendosierung vor der Mischung mit der wässrigen Phase direkt in die organische Phase. In allen diesen Ausführungsformen sind die oben beschriebenen pH-Wertbereiche zu beachten und gegebenenfalls durch einmalige oder mehrfache Nachdosierung von Natronlauge oder entsprechende Nachdosierung von Bisphenolatlösung einzuhalten. Ebenso muss der Temperaturbereich gegebenenfalls durch Kühlung oder Verdünnung eingehalten werden.

Die organische Phase kann aus einem oder Mischungen mehrerer Lösungsmittel bestehen. Geeignete Lösungsmittel sind aromatische und/oder aliphatische chlorierte Kohlenwasserstoffe, bevorzugt Dichlormethan, Trichlorethylen, 1,1,1-Trichlorethan, 1,1,2-Trichlorethan und Chlorbenzol und deren Gemische. Es können jedoch auch aromatische Kohlenwasserstoffe wie Benzol, Toluol, m-/p-/o-Xylol oder aromatische Ether wie Anisol allein, im Gemisch oder zusätzlich oder im Gemisch mit chlorierten Kohlenwasserstoffen verwendet werden, bevorzugt sind Dichlormethan und Chlorbenzol und deren Gemische. Eine andere Ausführungsform der Synthese verwendet Lösungsmittel welche Polycarbonat nicht lösen sondern nur anquellen. Es können daher auch Nichtlösungsmittel für Polycarbonat in Kombination mit Lösungsmitteln verwendet werden. Wobei dann als Lösungsmittel auch in der wässrigen Phase lösliche Lösungsmittel wie Tetrahydrofuran, 1,3- oder 1,4-Dioxan oder 1,3-Dioxolan verwendet werden können, wenn der Lösungsmittelpartner die zweite organische Phase bildet.

Geeignete Dihydroxydiarylalkane - vorangehend und im Folgenden unter anderem auch als Diphenol bezeichnet - sind solche der allgemeinen Formel,

HO-Z-OH

worin Z ein divalenter organischer Rest mit 6 bis 30 Kohlenstoffatomen ist, der eine oder mehrere aromatische Gruppen enthält. Beispiele solcher Verbindungen, die in das erfindungsgemäße Verfahren eingesetzt werden können sind Dihydroxydiarylalkane wie Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Dihydroxydiarylalkane sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphcnyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexyn und 1,1-Bis-(4-hydroxyphenyl)-3,3,5-trimethylcyclohexan (Bisphenol TMC).

Besonders bevorzugte Dihydroxydiarylalkane sind 4,4'-Dihydroxydiphenyl, 1,1-Bis-(4-hydroxyphenyl)-phenyl-ethan, 2,2-Bis-(4-hydroxyphenyl)-propan (Bisphenol A (BPA)), 2,2-Bis(3,5-dimethyl-4-hydroxyphenyl)-propan, 1, 1 -Bis-(4-hydroxyphenyl)-cyclohexan und 1,1-Bis-(4-hydroxyphenyl)-3,3,5-trimethylcyclohexan (Bisphenol TMC).

Diese und weitere geeignete Dihydroxydiarylalkane sind z.B. in den US-A 2 999 835, US-A 3,148,172 US-A 2,991,273, US-A 3 271 367, US-A 4,982,014 und US-A 2,999,846 in den deutschen Offenlegungsschriften DE-A 1 570 703, DE-A 2 063 050, DE-A 2 036 052, DE-A 2 211 956 und DE-A 3 832 396, der französischen Patentschrift FR-A 1 561 518, in der Monographie von H. Schnell, Chemistry and Physics of Polycarbonates, Interscience Publishers, New York 1964, S. 28ff; S.102ff und von D.G. Legrand, J.T. Bendler, Handbook of Polycarbonate Science and Technology, Marcel Dekker New York 2000, S. 72ff. beschrieben.

Erfindungsgemäß werden unter Polycarbonaten sowohl Homopolycarbonate als auch Copolycarbonate verstanden. Im Falle der erfindungsgemäßen Herstellung von Homopolycarbonaten wird nur ein Dihydroxydiarylalkan eingesetzt, im Falle der erfindungsgemäßen Herstellung von Copolycarbonaten werden mehrere Dihydroxydiarylalkane eingesetzt, wobei selbstverständlich die verwendeten Dihydroxydiarylalkane, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Unter Alkalilauge ist im Rahmen der Erfindung bevorzugt Natronlauge, Kalilauge oder Mischungen aus diesen, besonders bevorzugt Natronlauge zu verstehen.

Die wässrige Phase in dem Phasengrenzflächenverfahren zur Herstellung des Polycarbonats enthält Alkalilauge, ein oder mehrere Dihydroxydiarylalkane und Wasser, wobei die Konzentration dieser wässrigen Lösung bezüglich der Summe der Dihydroxydiarylalkane, nicht als Alkalisalz sondern als freies Dihydroxydiarylalkan gerechnet, bevorzugt zwischen 1 und 30 Gew.-%, besonders bevorzugt zwischen 3 und 25 Gew.-%, ganz besonders bevorzugt 15 bis 18 Gew.-%, bezogen auf das Gesamtgewicht der wässrigen Phase, beträgt. Die organische Phase in dem Phasengrenzflächenverfahren zur Herstellung des Polycarbonats enthält bevorzugt 12 bis 22 Gew. % Polycarbonate mit einem M_{w} von größer als 45000, bezogen auf das Gesamtgewicht der organischen Phase, und bevorzugt 12 bis 40 Gew.-%, besonders bevorzugt 15 bis 30 Gew.-% Polycarbonate mit einem M_{w} von 45000 oder kleiner, bezogen auf das Gesamtgewicht der organischen Phase. Dabei kann es bei höheren Konzentrationen notwendig sein, die Lösungen zu temperieren. Das zur Lösung der Dihydroxydiarylalkane verwendete Alkalihydroxid, z.B. Natrium-oder Kaliumhydroxid, kann fest oder als entsprechende wässrige Alkalilauge verwendet werden. Die Konzentration der Alkalilauge richtet sich nach der Zielkonzentration der angestrebten Dihydroxydiarylalkanlösung, liegt aber in der Regel zwischen 5 und 25 Gew.-%, bevorzugt 5 und 10 Gew.-% bezogen auf 100 %ige Alkalilauge, oder aber wird konzentrierter gewählt und anschließend mit Wasser verdünnt. Bei dem Verfahren mit anschließender Verdünnung werden Alkalilaugen mit Konzentrationen zwischen 15 und 75 Gew.-%, bevorzugt 25 und 55 Gew.-%, gegebenenfalls temperiert, verwendet. Der Alkaligehalt pro mol Dihydroxydiarylalkan ist von der Struktur des Dihydroxydiarylalkans abhängig, bewegt sich aber in der Regel von 1,5 mol Alkali / mol Dihydroxydiarylalkan bis 2,5 mol Alkali / mol Dihydroxydiarylalkan, bevorzugt von 1,8 bis 2,2 Mol Alkali / mol Dihydroxydiarylalkane und im besonders bevorzugten Fall, dass Bisphenol A als alleiniges Dihydroxydiarylalkan verwendet wird, von 1,85 bis 2,15 mol Alkali, ganz besonders bevorzugt 2,00 mol Alkali. Wird mehr als ein Dihydroxydiarylalkan verwendet, so können diese zusammen gelöst werden. Da die Löslichkeit von Dihydroxydiarylalkanen sehr stark von der verwendeten Alkalimenge abhängt, kann es jedoch vorteilhaft sein, statt einer Lösung mit zwei Dihydroxydiarylalkanen besser zwei Lösungen mit je einem in einer geeigneten Alkalilauge gelösten Dihydroxydiarylalkan zu haben, die dann getrennt so dosiert werden, dass das richtige Mischungsverhältnis entsteht. Weiterhin kann es von Vorteil sein, das oder die Dihydroxydiarylalkan(e) nicht in Alkalilauge sondern in mit zusätzlichem Alkali ausgestatteter, verdünnter Dihydroxydiarylalkanelösung zu lösen. Die Lösevorgänge können von festem Dihydroxydiarylalkane, meist in Schuppen oder Prillform oder auch von geschmolzenem Dihydroxydiarylalkane ausgehen. Das eingesetzte Alkalihydroxid bzw. die Alkalilauge kann im Falle von Natriumhydroxid bzw. Natronlauge beispielsweise nach dem Amalgamverfahren oder dem sogenannten Membranverfahren hergestellt worden sein. Beide Verfahren werden seit langer Zeit benutzt und sind dem Fachmann geläufig. Bevorzugt wird im Falle von Natronlauge solche hergestellt nach dem Membranverfahren verwendet.

In einer solchen wässrigen Lösung und/oder der wässrigen Phase liegen das oder die Dihydroxydiarylalkan(e) ganz oder teilweise in Form der entsprechenden Alkalisalze bzw. Dialkalisalze vor.

Eine gegebenenfalls praktizierte Dosierung von Dihydroxydiarylalkan(en) nach oder während der Phosgeneinleitung kann so lange durchgeführt werden, wie Phosgen oder dessen unmittelbare Folgeprodukte, die Chlorkohlensäureester in der Reaktionslösung vorhanden sind.

Als Katalysatoren für das erfindungsgemäße Verfahren eignen sich bevorzugt tertiäre Amine, wie z.B. Triethylamin, Tributylamin, Trioctylamin, N-Ethylpiperidin, N-Methylpiperidin oder N-i/n-Propylpiperidin, quartäre Ammoniumsalze wie z.B. Tetrabutylammonium-, Tributylbenzylammonium-, Tetraethylammoniumhydroxid, -chlorid, -bromid, -hydrogensulfat oder -tetrafluoroborat sowie die den vorangehend genannten Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es wird eine Oniumverbindung - d.h. Ammonium- oder Phosphoniumverbindung - oder Gemische aus Oniumverbindungen als Katalysatoren verwendet. Im Falle einer solchen Oniumsalzkatalyse ist eine Zugabe vor der Phosgendosierung bevorzugt. Die Dosierung des Katalysators oder der Katalysatoren kann in Substanz, in einem inerten Lösungsmittel, vorzugsweise dem oder einem derer der organischen Phase bei der Polycarbonatsynthese, oder auch als wässrige Lösung erfolgen. Im Falle der Verwendung von tertiären Aminen als Katalysator kann beispielsweise deren Dosierung in wässriger Lösung als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt vorzugsweise zwischen 0,001 bis 10 Mol %, bevorzugt 0,01 bis 8 Mol %, besonders bevorzugt 0,05 bis 5 Mol % bezogen auf Mole eingesetzte Dihydroxydiarylalkane.

Es wurde gefunden, dass die Wirkung des Katalysators und die Nebenreaktionen mit dem Katalysator temperaturabhängig sind. Die Temperatur bei der Katalysatorzugabe (Schritt (d)) beträgt daher höchstens 45 °C, vorzugsweise 35 bis 45 °C, besonders bevorzugt 35 bis 40 °C. Diese Temperatur kann mittels Kühlung erreicht werden. Dazu kann die Reaktionsmischung am Anfang der Reaktion und/oder vor der Katalysatorzugabe gekühlt werden. Vorzugsweise wird die Lösung zumindest vor der Katalysatorzugabe, beispielsweise unmittelbar davor, gekühlt. Um Nebenreaktionen zu vermeiden, verwendet man vorzugsweise 0,8 bis 1,6 Mol.-% Katalysator (bezogen auf das Dihydroxyalkan). Erfindungsgemäß erfolgt die Katalysatorzugabe in Schritt (d), vorher ist vorzugsweise kein Katalysator in der Reaktionsmischung vorhanden.

Zur Regelung des Molekulargewichtes kann gegebenenfalls der Zusatz von einem oder mehreren monofunktionellen Kettenabbrecher(n), wie Phenol oder Alkylphenolen, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern erforderlich sein. Solche Kettenabbrecher werden gegebenenfalls entweder mit dem oder den Dihydroxydiarylalkan(en) der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, an oder zu dem kein Phosgen mehr vorliegt, aber der Katalysator noch nicht zudosiert wurde, d.h. sie können vor dem Katalysator, mit dem Katalysator zusammen oder parallel dazu zudosiert werden. Die Kettenabbrecher(n) können als Schmelze, in einer alkalisch wässrigen Lösung, oder in einer Lösung im für die Reaktion verwendeten organischen Lösemittel zudosiert werden. Bevorzugt ist die Lösung des/der Kettenabbrecher(s) im verwendeten organischen Lösemittel, wodurch der/die Kettenabbrecher(n) in die organische Phase in die Nähe von den reaktiven Säurechlorid-endgruppen gebracht wird/werden. Besonders bevorzugt erfolgt die Zudosierung des Kettenabbrechers in Schritt (d) vor Zugabe des Katalysators.

In einer besonders bevorzugten Ausführungsform des erfindungsgemäßen Verfahrens wird Phenol als Kettenabbrecher eingesetzt. Vorzugsweise wird das Phenol in Schritt (d) in Form einer Lösung umfassend wenigstens ein organisches Lösungsmittel und das Phenol in einer Konzentration von 5 bis 40 Gew.-%, bevorzugt 10 bis 25 Gew.-%, eingesetzt. In dieser Ausführungsform wird die wässrige Phase am Ende der Reaktion (d.h. in Schritt (d)) vorzugsweise auf einen pH Wert von 11,3 bis 11,6 eingestellt. Vorzugsweise erfolgen die Zugabe des Phenols und die Einstellung des pH-Werts auf 11,3 bis 11,6 vor Zugabe des Katalysators.

In einer anderen bevorzugten Ausführungsform des erfindungsgemäßen Verfahrens wird p-tert-Butylphenol als Kettenabbrecher eingesetzt. Vorzugsweise wird das p-tert-Butylphenol in Schritt (d) in Form einer Lösung umfassend wenigstens ein organisches Lösungsmittel und das p-tert-Butylphenol in einer Konzentration von 2 bis 25 Gew.-%, bevorzugt 3 bis 15 Gew.-%, eingesetzt. In dieser Ausführungsform wird die wässrige Phase am Ende der Reaktion (d.h. in Schritt (d)) vorzugsweise auf einen pH Wert von 11,5 bis 11,8 eingestellt. Vorzugsweise erfolgen die Zugabe des p-tert-Butylphenols und die Einstellung des pH-Werts auf 11,5 bis 11,8 vor Zugabe des Katalysators.

In der gleichen Weise können gegebenenfalls ein oder mehrere Verzweiger oder Verzweigermischungen der Synthese zugesetzt werden. Üblicherweise werden solche Verzweiger jedoch vor dem oder den Kettenabbrecher(n) zugesetzt. Beispielsweise werden als Verzweiger Trisphenole, Quarterphenole, Säurechloride von Tri- oder Tetracarbonsäuren oder auch Gemische der Polyphenole oder der Säurechloride verwendet.

Beispiele für als Verzweiger geeignete Verbindungen mit drei oder mehr als drei phenolischen Hydroxylgruppen sind Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Beispiele für sonstige als Verzweiger geeignete trifunktionelle Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Besonders bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Bei den im Rahmen dieser Anmeldung angegebenen mittleren Molekulargewichten handelt es sich um Gewichtsmittel (M_{w}), welche durch Gelpermeationschromotographie (GPC, Waters "Mixed Bed" Kolonnen) in Methylenchlorid als Eluens (unter Verwendung von BPA-Homopolycarbonat-Standard mit einem Mw von 31.000 g/mol) ermittelt werden.

Die Synthese von Polycarbonaten aus Dihydroxydiarylalkanen und Phosgen im alkalischen Milieu ist eine exotherme Reaktion und wird erfindungsgemäß bevorzugt in einem Temperaturbereich von -5° C bis 100° C, besonders bevorzugt 15°C bis 80°C, ganz besonders bevorzugt 25 bis 65°C durchgeführt, wobei je nach Lösungsmittel oder Lösungsmittelgemisch gegebenenfalls unter Überdruck gearbeitet werden muss. Bei Zugabe des Katalysators in Schritt (d) beträgt die Temperatur erfindungsgemäß höchstens 45°C. Je nach verwendetem Reaktor kann bei unterschiedlichen Drücken gearbeitet werden. Beispielsweise kann bevorzugt bei einem Druck von 0,5 bis 20 bar (absolut) gearbeitet werden.

Die Durchführung der Polycarbonatsynthese erfolgt kontinuierlich. Die gesamte Reaktion, d.h. Umsetzung und weitere Aufkondensation, kann daher in Rührkesseln, Rohrreaktoren, Umpumpreaktoren oder Rührkesselkaskaden oder deren Kombinationen erfolgen, wobei durch Verwendung der bereits erwähnten Mischorgane sicherzustellen ist, dass wässrige und organische Phase sich möglichst erst dann entmischen, wenn das Synthesegemisch ausreagiert hat, d.h. kein verseifbares Chlor von Phosgen oder Chlorkohlensäureestern mehr enthalten ist. In einer bevorzugten Ausführungsform des erfindungsgemäßen Verfahrens wird Schritt (b) in einem Strömungsrohr durchgeführt. In einer solchen Anordnung lässt sich besonders vorteilhaft eine extrem kurze Verweilzeit von weniger als 0,5 s der durchgeführten Mischung realisieren. In einer weiteren bevorzugten Ausführungsform des erfindungsgemäßen Verfahrens wird Schritt (c) in einem Umpumpreaktor durchgeführt.

Vorzugsweise wird als Umpumpreaktor ein Tankreaktor mit Umpumpschleife und einer Umpumprate von 5 bis 15 mal, vorzugsweise 7,5 bis 10 mal der Durchströmungsmenge eingesetzt. Vorzugswiese beträgt die Verweilzeit der Reaktionsmischung in diesem Reaktor 2 bis 20 Minuten, besonders bevorzugt 2 bis 5 Minuten.

In einer weiteren bevorzugten Ausführungsform des erfindungsgemäßen Verfahrens wird Schritt (d) in einem Umpumpreaktor gefolgt von weiteren Verweilreaktoren durchgeführt. Vorzugsweise beträgt die Verweilzeit der Reaktionsmischung in dem Umpumpreaktor und den Verweilreaktoren jeweils 2 bis 20 Minuten.

Die beiden Phasen die das Reaktionsgemisch bilden, d.h. organische und wässrige Phase, werden erfindungsgemäß mittels eines Dispergators gemischt. Als Dispergatoren geeignet sind bevorzugt Düsen oder Strahldispergatoren, insbesondere solche, die eine Vorzugsrichtung der Dosierung gestatten. Im Rahmen der Erfindung geeignete Dispergatoren sind dem Fachmann bekannt und beispielsweise in EP-A 1 368 407 und EP-A 1 599 520 beschrieben.

Als Düsen kommen beispielsweise Spaltdüsen, Ringschlitzdüsen, Lochdüsen, Lefosdüsen oder Glattstrahldüsen in Frage.

Erfindungsgemäß geeignete Düsen können solche mit einem spezifischen Energieeintrag von vorzugsweise 0.02▪e⁵ bis 5.0▪e⁶ W/L (Watt/Liter), besonders bevorzugt 0.5▪e⁵ bis 1▪e⁶ W/1 sein. Apparate dieser Art sind als Strahldispergatoren, Lochblendendispergatoren bzw. Hochdruck-Homogenisatoren bekannt.

Der anzuwendende Druck kann vorzugsweise 0.001 bis 1 MPa, besonders bevorzugt 0,001 bis 0,5 MPa betragen.

Es können jedoch auch Dispergatoren mit deutlich geringerem anzuwendenden Druck betrieben werden. Dies wird erreicht, indem mehrere Bohrungen verwendet werden und/oder die Bohrungen größere Durchmesser aufweisen, so dass sich die gesamte Fläche aller Bohrungen erhöht. Die erforderliche Zahl und der Durchmesser der Bohrungen können über den Druckverlust berechnet werden. Solche Berechnungsmethoden sind in der Literatur beschieben und dem Fachmann bekannt.

In bevorzugten Ausführungsformen des erfindungsgemäßen Verfahrens werden solche Dispergatoren verwendet, worin die organische und die wässrige Phase vorzugsweise getrennt voneinander durch jeweils eine Pumpe einem Vordispergator zugeführt werden. Vorzugsweise beträgt der Druck dieser Pumpen jeweils maximal 2,5 MPa, vorzugsweise von 0,001 bis 0,5 MPa.

Anschließend erfolgt eine Homogenisierung der Vordispersion vorzugsweise in einer Homogenisierdüse ebenfalls bei einem Druck von maximal 2,5 MPa, vorzugsweise von 0,001 bis 0,5 MPa In bevorzugten Ausführungsformen des erfindungsgemäßen Verfahrens enthält der Dispergator demnach einen Vordispergator und eine Homogenisierdüse.

Als Vordispergator eignen sich alle beliebigen Düsen, wie z.B. Spaltdüsen, Ringschlitzdüsen, Lochdüsen, Lefosdüsen oder Glattstrahldüsen sowie Strahldispergatoren. Als Homogenisierdüsen eignen sich ebenfalls alle beliebigen Düsen, wie z.B. Spaltdüsen, Ringschlitzdüsen, Lochdüsen, Lefosdüsen oder Glattstrahldüsen sowie Strahldispergatoren.

In einer weiteren bevorzugten Ausführungsform können rotierende Dispergatoren wie in EP B1 2090605 beschrieben verwendet werden.

Das erfindungsgemäße Verfahren ermöglicht trotz des geringen Phosgenüberschusses eine gute Phasentrennung am Ende der Reaktion und sowohl einen geringen Wassergehalt in der organischen Phase als auch geringen Restmonomergehalt in der wässrigen Phase. Ferner wird der Einbau von Katalysatorbestandteilen in das Produkt vermieden.

Zur Aufarbeitung lässt man das ausreagierte, höchstens noch Spuren, bevorzugt weniger als 2 ppm an Chlorkohlensäureestern enthaltende, mindestens zweiphasige Reaktionsgemisch zur Phasentrennung absitzen. Die wässrige alkalische Phase wird gegebenenfalls ganz oder teilweise zurück in die Polycarbonatsynthese als wässrige Phase geleitet oder aber der Abwasseraufarbeitung zugeführt, wo Lösungsmittel- und Katalysatoranteile abgetrennt und gegebenenfalls in die Polycarbonatsynthese rückgeführt werden. In einer anderen Variante der Aufarbeitung wird nach Abtrennung der organischen Verunreinigungen, insbesondere Lösungsmitteln und Polymerresten, und gegebenenfalls nach der Einstellung eines bestimmten pH-Wertes, z.B. durch Natronlaugezugabe, das Salz abgetrennt, welches z. B. der Chloralkalielektrolyse zugeführt werden kann, während die wässrige Phase gegebenenfalls wieder der Polycarbonatsynthese zugeführt wird.

Die organische, das Polycarbonat enthaltende Phase kann anschließend zur Entfernung der Kontaminationen alkalischer, ionischer oder katalytischer Art auf verschiedene, dem Fachmann bekannte Weisen gereinigt werden.

Die organische Phase enthält in der Regel auch nach einem oder mehreren Absetzvorgängen, gegebenenfalls unterstützt durch Durchläufe durch Absetzkessel, Rührkessel, Coalescer oder Separatoren bzw. Kombinationen aus diesen Maßnahmen - wobei gegebenenfalls Wasser in jedem oder einigen Trennschritten unter Umständen unter Verwendung von aktiven oder passiven Mischorganen zudosiert werden kann - noch Anteile der wässrigen alkalischen Phase in feinen Tröpfchen sowie des oder der Katalysator(en). Nach dieser groben Abtrennung der alkalischen, wässrigen Phase kann die organische Phase ein oder mehrmals mit verdünnten Säuren, Mineral-, Carbon- Hydroxycarbon-und/oder Sulfonsäuren gewaschen werden. Bevorzugt sind wässrige Mineralsäuren insbesondere Salzsäure, phosphorige Säure, Phosphorsäure oder Mischungen dieser Säuren. Die Konzentration dieser Säuren sollte dabei vorzugsweise im Bereich 0,001 bis 50 Gew. %, bevorzugt 0,01 bis 5 Gew. % liegen. Weiterhin kann die organische Phase mit entsalztem oder destilliertem Wasser wiederholt gewaschen werden. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen aus diesen Maßnahmen, wobei das Waschwasser zwischen den Waschschritten gegebenenfalls unter Verwendung von aktiven oder passiven Mischorganen zudosiert werden kann. Zwischen diesen Waschschritten oder auch nach der Wäsche können gegebenenfalls Säuren, vorzugsweise gelöst im Lösungsmittel welches der Polymerlösung zugrunde liegt, zugegeben werden. Bevorzugt werden hier Chlorwasserstoffgas, Phosphorsäure oder phosphorige Säure verwendet, die gegebenenfalls auch als Mischungen eingesetzt werden können. Die so erhaltene gereinigte Polycarbonatlösung sollte vorzugsweise nach dem letzten Trennvorgang nicht mehr als 5 Gew. %, bevorzugt weniger als 1 Gew. %, ganz besonders bevorzugt weniger als 0,5 Gew. % Wasser enthalten.

Die Isolierung des Polycarbonats aus der Lösung kann durch Verdampfen des Lösungsmittels mittels Temperatur, Vakuum oder eines erhitzten Schleppgases erfolgen. Andere Isolierungsmethoden sind beispielsweise Kristallisation und Fällung.

Erfolgt die Konzentrierung der Polycarbonatlösung und eventuell auch die Isolierung des Polycarbonats durch Abdestillieren des Lösungsmittels, gegebenenfalls durch Überhitzung und Entspannung, so spricht man von einem "Flash-Verfahren". Ein solches Verfahren ist dem Fachmann bekannt und beispielsweise in "Thermische Trennverfahren", VCH Verlagsanstalt 1988, S. 114 beschrieben. Wird statt dessen ein geheiztes Trägergas zusammen mit der einzudampfenden Lösung versprüht, so spricht man von einer "Sprühverdampfung/Sprühtrocknung", welche beispielhaft in Vauck, "Grundoperationen chemischer Verfahrenstechnik", Deutscher Verlag für Grundstoffindustrie 2000, 11.Auflage, S. 690 beschrieben ist. Alle diese Verfahren sind in der Patentliteratur und in Lehrbüchern beschrieben und dem Fachmann geläufig.

Bei der Entfernung des Lösungsmittels durch Temperatur (Abdestillieren) bzw. dem technisch effektiveren Flash-Verfahren erhält man hochkonzentrierte Polycarbonatschmelzen. Beim Flashverfahren werden Polymerlösungen wiederholt unter leichtem Überdruck auf Temperaturen oberhalb des Siedepunktes unter Normaldruck erhitzt und diese, bezüglich des Normaldruckes, überhitzten Lösungen anschließend in ein Gefäß mit niedrigerem Druck, z.B. Normaldruck, entspannt. Es kann dabei von Vorteil sein, die Aufkonzentrationsstufen, oder anders ausgedrückt die Temperaturstufen der Überhitzung nicht zu groß werden zu lassen, sondern lieber ein zwei- bis vierstufiges Verfahren zu wählen.

Aus den so erhaltenen hochkonzentrierten Polycarbonatschmelzen können die Reste des Lösungsmittels entweder direkt aus der Schmelze mit Ausdampfextrudern (vgl. z.B. BE-A 866 991, EP-A 0 411 510, US-A 4 980 105, DE-A 33 32 065), Dünnschichtverdampfern (vgl. z.B. EP-A 0 267 025), Fallfilmverdampfern, Strangverdampfern, Schaumverdampfern (z.B. US 2012/015763 A1) oder durch Friktionskompaktierung (vgl. z.B. EP-A 0 460 450), gegebenenfalls auch unter Zusatz eines Schleppmittels, wie Stickstoff oder Kohlendioxid oder unter Verwendung von Vakuum (vgl. z.B. EP-A 0 039 96, EP-A 0 256 003, US-A 4 423 207), entfernt werden, alternativ auch durch anschließende Kristallisation (vgl. z.B. DE-A 34 29 960) und/oder Ausheizen der Reste des Lösungsmittels in der festen Phase (vgl. z.B. US-A 3 986 269, DE-A 20 53 876). Auch diese Verfahren und die hierzu erforderlichen Vorrichtungen sind in der Literatur beschrieben und dem Fachmann geläufig.

Polycarbonat-Granulate können - wenn möglich - durch direktes Abspinnen der Schmelze und anschließender Granulierung oder aber durch Verwendung von Austragsextrudern von denen in Luft oder unter Flüssigkeit, meist Wasser, abgesponnen wird, erhalten werden. Werden Extruder verwendet, so kann man der Polycarbonatschmelze vor dem Extruder, gegebenenfalls unter Einsatz von statischen Mischern oder durch Seitenextruder in diesem Extruder, Additive zusetzen.

Alternativ kann die Polycarbonatlösung einer Sprühverdampfung unterzogen werden. Bei einer Versprühung wird die Polycarbonatlösung gegebenenfalls nach Erhitzung entweder in ein Gefäß mit Unterdruck verdüst oder mittels einer Düse mit einem erhitzten Trägergas, z.B. Stickstoff, Argon oder Wasserdampf in ein Gefäß mit Normaldruck verdüst. In beiden Fällen erhält man in Abhängigkeit von der Konzentration der Polymerlösung Pulver (verdünnt) oder Flocken (konzentriert) des Polymers, aus dem gegebenenfalls auch die letzten Reste des Lösungsmittels wie oben entfernt werden müssen. Anschließend kann mittels eines Compoundierextruders und anschließender Abspinnung Granulat erhalten werden. Auch hier können Additive, wie oben beschrieben, in der Peripherie oder dem Extruder selbst, zugesetzt werden. Oftmals kann es erforderlich sein, vor der Extrusion aufgrund der geringen Schüttdichte der Pulver und Flocken einen Kompaktierungsschritt für das Polymerpulver zu durchlaufen.

Aus der gewaschenen und gegebenenfalls noch aufkonzentrierten Polycarbonatlösung kann durch Zugabe eines Nichtlösungsmittels für Polycarbonat das Polymer weitgehend ausgefällt werden. Die Nichtlösungsmittel wirken dabei als Fällungsmittel. Hierbei ist es vorteilhaft, erst eine geringe Menge des Nichtlösungsmittels zuzugeben und gegebenenfalls auch Wartezeiten zwischen den Zugaben der Chargen an Nichtlösungsmittel einzulegen. Es kann außerdem von Vorteil sein, verschiedene Nichtlösungsmittels einzusetzen. Verwendung als Fällungsmittel finden hier z.B. aliphatische oder cycloaliphatische Kohlenwasserstoffe, insbesondere Heptan, i-Octan oder Cyclohexan, Alkohole wie z.B. Methanol, Ethanol oder i-Propanol, Ketone, wie z.B. Aceton, oder Mischungen aus diesen. Bei der Fällung wird in der Regel die Polymerlösung langsam dem Fällungsmittel zugesetzt. Die so erhaltenen Polycarbonate werden wie bei der Sprühverdampfung beschrieben zu Granulat verarbeitet und gegebenenfalls additiviert.

Nach anderen Verfahren werden Fällungs- und Kristallisations-Produkte oder amorph erstarrte Produkte in feinkörniger Form durch Überleiten von Dämpfen eines oder mehrer Nichtlösungsmittel für Polycarbonat, unter gleichzeitiger Erhitzung unterhalb der Glastemperatur kristallisiert und weiter zu höheren Molekulargewichten aufkondensiert. Handelt es sich dabei um Oligomere gegebenenfalls mit unterschiedlichen Endgruppen (Phenolische und Kettenabbrecherenden) so spricht man von Festphasenaufkondensation.

Der Zusatz von Additiven dient der Verlängerung der Nutzungsdauer oder der Verbesserung der Farbstabilität (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen, zusammen oder in mehreren verschiedenen Mischungen der Polymerschmelze zugesetzt werden. Dies kann direkt bei der Isolierung des Polymeren oder aber nach Aufschmelzen von Granulat in einem sogenannten Compoundierungsschritt erfolgen. Dabei können die Additive beziehungsweise deren Mischungen als Feststoff, vorzugsweise als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, hydroxylierte Thiodiphenylether, Alkylidenbisphenole, O-, N- und S-Benzylverbindungen, hydroxybenzylierte Malonate, aromatische Hydroxybenzylverbindungen, Triazinverbindungen, Acylaminophenole, Ester von β-(3,5-Di-tert-butyl-4-hydroxyphenyl)propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide of β-(3,5-Di-tert-butyl-4-hydroxyphenyl)propionsäure, geeignete Thiosynergisten, sekundäre Antioxidantien, Phosphite, Phosphonite, Phosphonate und Phosphane, Benzofuranone oder Indolinone.

Bevorzugte Antioxidantien bzw. Thermostabilisatoren sind organische Phosphite, Phosphonate und Phosphane, meist solche bei denen die organischen Reste ganz oder teilweise aus gegebenenfalls substituierten aromatischen Resten bestehen.

Als Komplexierungsmittel für Schwermetalle und zur Neutralisation von Alkalispuren sind beispielsweise o- oder m-Phosphorsäuren, ganz oder teilweise veresterte Phosphate oder Phosphite geeignet.

Als Lichtschutzmittel (UV-Absorber) sind beispielsweise 2-(2'-Hydroxyphenyl)benzotriazole, 2-Hydroxybenzophenone, Ester von substituierten und unsubstituierten Benzoesäuren, Acrylate, sterisch gehinderte Amine, Oxamide, 2-(2-Hydroxyphenyl)-1,3,5-triazine oder substituierte Benztriazole geeignet, besonders bevorzugt sind substituierte Benztriazole.

Polypropylenglykole allein oder in Kombination mit z.B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Außerdem können Verarbeitungshilfsmittel wie Entformungsmittel, wie beispielsweise Derivate langkettiger Fettsäuren, zugesetzt werden. Bevorzugt sind z.B. Pentaerythrittetrastearat und Glycerinmonostearat. Sie werden allein oder im Gemisch vorzugsweise in einer Menge von 0,02 bis 1 Gew.-%, bezogen auf die Masse der Zusammensetzung eingesetzt. Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren. Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des Weiteren können Farbmittel, wie organische Farbstoffe oder Pigmente sowie anorganische Pigmente, IR-Absorber, einzeln, im Gemisch oder auch in Kombination mit Stabilisatoren, Glasfasern, Glas(hohl)kugeln oder anorganischen Füllstoffen zugesetzt werden.

Polycarbonatschmelzen, die durch Isolierung des Polymers oder durch Compoundierung erzeugt wurden, können durch einen Düsenkopf in Strangform abgesponnen, mit Gas, z.B. Luft oder Stickstoff, oder einer Kühlflüssigkeit, meist Wasser, abgekühlt und die erstarrten Stränge in handelsüblichen Granulatoren mit Schneiden die sich z.B. auf einer sich drehenden Walze befinden, in Luft, unter Schutzgas wie Stickstoff oder Argon oder unter Wasser granuliert werden. Je nach apparativer Ausführung entstehen dabei säulenförmige Granulate mit rundem oder elliptischem Querschnitt und rauher oder glatter Oberfläche. Die Schnittkanten können glatt sein oder glasartigen Bruch aufweisen mit ausgebrochenen Schnittkanten oder aber stehengebliebenen Resten an den Schnittkanten. Wünschenswert ist ein möglichst gleichmäßig geformtes Granulat mit möglichst wenig verbleibenden Überständen an den Schnittkanten. Weiterhin ist der Staubanteil im Granulat möglichst gering zu halten, bevorzugt unter 100 mg/kg Granulat. Der Durchmesser der Granulatkörner soll zwischen 0,5 mm und 10 mm, bevorzugt bei 1 bis 8 mm, besonders bevorzugt bei 3 bis 6 mm liegen. Während die Länge der Granulatkörner zwischen 1 bis 10 mm, bevorzugt zwischen 2 bis 8 mm und das Gewicht zwischen 10 und 50 mg bevorzugt zwischen 15 und 30 mg liegen sollte. Bevorzugt ist ein Granulat dessen Verhältnis von Durchmesser, bei elliptischem Querschnitt des mittleren Durchmessers, zur Länge 0,8 bis 1,2 beträgt, besonders bevorzugt eines mit dem Verhältnis von ca. 1. Diese Parameter unterliegen Größenverteilungen, bevorzugt sind möglichst enge Verteilungen, also möglichst gleichmäßig dimensionierte Granulate.

Abkühlung, Abspinnung, Granulierung und der anschließende Transport oder die Förderung des Granulates mit Gas oder Flüssigkeit, und die anschließende Lagerung, gegebenenfalls nach einem Durchmischungs- oder Homogenisierungsprozess, sind so zu gestalten, dass möglichst trotz der gegebenenfalls vorhandenen statischen Aufladung keine Verunreinigungen auf die Polymer-, Strang- oder Granulatoberfläche aufgebracht werden, wie beispielsweise Staub, Abrieb aus den Maschinen, aerosolartige Schmiermittel und andere Flüssigkeiten sowie Salze aus möglicherweise verwendeten Wasserbädern oder Kühlungen.

Die erfindungsgemäß hergestellten Polycarbonate eignen sich beispielsweise zur Herstellung von Extrudaten und Formkörpern, insbesondere solchen zur Verwendung im transparenten Bereich, ganz besonders im Bereich optischer Anwendungen wie z.B. Platten, Stegplatten, Verglasungen, Streuscheiben, Lampenabdeckungen oder optischer Datenspeicher, wie Audio-CD, CD-R(W), DVD, DVD-R(W), Minidiscs in ihren verschiedenen nur lesbaren oder aber einmalbeschreibbaren gegebenenfalls auch wiederholt beschreibbaren Ausführungsformen.

Weitere Anwendungen sind beispielsweise, ohne jedoch den Gegenstand der vorliegenden Erfindung einzuschränken:
1. Sicherheitsscheiben, die bekanntlich in vielen Bereichen von Gebäuden, Fahrzeugen und Flugzeugen erforderlich sind, sowie als Schilde von Helmen.
2. Folien
3. Blaskörper (s.a. US-A 2 964 794), beispielsweise 1 bis 5 Gallon Wasserflaschen.
4. Lichtdurchlässige Platten, wie Massivplatten oder insbesondere Hohlkammerplatten, beispielsweise zum Abdecken von Gebäuden wie Bahnhöfen, Gewächshäusern und Beleuchtungsanlagen.
5. Optische Datenspeicher, wie Audio CD's, CD-R(W)'s, DCD's, DVD-R(W)'s, Minidiscs und den Folgeentwicklungen
6. Ampelgehäuse oder Verkehrsschilder
7. Schaumstoffe mit offener oder geschlossener gegebenenfalls bedruckbarer Oberfläche
8. Fäden und Drähte (s.a. DE-A 11 37 167)
9. Lichttechnische Anwendungen, gegebenenfalls unter Verwendung von Glasfasern für Anwendungen im transluzenten Bereich
10. Transluzente Einstellungen mit einem Gehalt an Bariumsulfat und oder Titandioxid und oder Zirkoniumoxid bzw. organischen polymeren Acrylatkautschuken (EP-A 0 634 445, EP-A 0 269 324) zur Herstellung von lichtdurchlässigen und lichtstreuenden Formteilen.
11. Präzisionsspritzgussteile, wie Halterungen, z.B. Linsenhalterungen; hier werden gegebenenfalls Polycarbonate mit Glasfasern und einem gegebenenfalls zusätzlichen Gehalt von 1-10 Gew. % Molybdändisulfid (bez. auf die gesamte Formmasse) verwendet.
12. optische Geräteteile, insbesondere Linsen für Foto- und Filmkameras (DE-A 27 01 173).
13. Lichtübertragungsträger, insbesondere Lichtleiterkabel (EP-A 0 089 801) und Beleuchtungsleisten
14. Elektroisolierstoffe für elektrische Leiter und für Steckergehäuse und Steckverbinder sowie Kondensatoren.
15. Mobiltelefongehäuse.
16. Network interface devices
17. Trägermaterialien für organische Fotoleiter
18. Leuchten, Scheinwerferlampen, Streulichtscheiben oder innere Linsen.
19. Medizinische Anwendungen wie Oxygenatoren, Dialysatoren.
20. Lebensmittelanwendungen, wie Flaschen, Geschirr und Schokoladenformen.
21. Anwendungen im Automobilbereich, wie Verglasungen oder in Form von Blends mit ABS als Stoßfänger.
22. Sportartikel wie Slalomstangen, Skischuhschnallen.
23. Haushaltsartikel, wie Küchenspülen, Waschbecken, Briefkästen
24. Gehäuse, wie Elektroverteilerkästen
25. Gehäuse für elektrische Geräte wie Zahnbürsten, Föne, Kaffeemaschinen, Werkzeugmaschinen, wie Bohr-, Fräs-, Hobelmaschinen und Sägen
26. Waschmaschinen-Bullaugen
27. Schutzbrillen, Sonnenbrillen, Korrekturbrillen bzw. deren Linsen.
28. Lampenabdeckungen
29. Verpackungsfolien
30. Chip-Boxen, Chipträger, Boxen für Si-Wafer
31. Sonstige Anwendungen wie Stallmasttüren oder Tierkäfige.

Die folgenden Beispiele dienen der beispielhaften Erläuterung der Erfindung und sind nicht als Beschränkung aufzufassen.

### Beispiele

Im Folgenden wird als Dihydroxydiarylalkan 2,2'-bis-(4-hydroxyphenyl)-propan (Bisphenol A, BPA) eingesetzt, das Lösungsmittel der organischen Phase ist ein Gemisch aus 50 bis 60 Gew.-% Methylenchlorid und 50 bis 40 Gew.-% Monochlorbenzol. In allen Beispielen wurde ein Polycarbonat mit einem gewichtsmittlerem Molekulargewicht von 25.000 bis 26.000 g/mol hergestellt, gemessen per GPC (Waters "Mixed Bed" Kolonnen in Methylenchlorid mit BPA-Homopolycarbonat-Standard mit einem Mw von 31.000 g/mol).

Beispiele 1 bis 3 wurden in einer technischen Versuchsanlage durchgeführt.

### Beispiel 1 (nicht erfindungsgemäß):

Als Vorrichtungen für die einzelnen Verfahrensschritte wurden verwendet:

| | |
|---|---|
| Verfahrensschritt (a): | Dispergator in Form einer Lochblendendüse mit einer Vordispergierung (mit einer Lochblende mit 5 Bohrungen mit jeweils 2,5 mm Durchmesser bei einer Dicke der Lochscheibe von 2,35 und einem Druckabfall von 0,2 bar bei 5,2 m/s Strömungsgeschwindigkeit), 26 ms Verweilzeit im Vordispergierraum und nachfolgender Dispergierung (mit einer weiteren Lochblende mit 18 Bohrungen mit jeweils 1,5 mm Durchmesser bei einer Dicke der Lochscheibe von 2,35 mm und 0,8 bar Druckabfall bei einer Strömungsgeschwindigkeit von 8,9 m/s) durch die eine Flüssigkeit in die andere dispergiert wird |
| Verfahrensschritt (b): | Ein Verweilzeitreaktor mit 0,2 s Verweilzeit. |
| Verfahrensschritt (c): | Ein Umpumpreaktor ausgestattet mit einer Zudosierstelle (z.B. für NaOH), einer Pumpe, einem Wärmetauscher, einem Überlaufbehälter und einer T-förmigen Entnahmestelle mit einem Volumen von 140 1, ausgestattet mit einer pH-und einer Leitfähigkeitssonde; bei Eintritt in den Umpumpreaktor erfolgt Redispergierung |
| Verfahrensschritt (d): | Eine Austragspumpe mit vorgeschalteten Dosierstellen für Kettenabbrecher und NaOH-Lösung, dazwischen ein statischer Mischer, nachgeschaltet ein Schlangenrohrreaktor mit Misch- und Verweilzonen und einem Gesamtvolumen von 60 1 (erster Verweilreaktor), und nachgeschaltet ein weiterer Schlangenrohrreaktor (zweiter Verweilreaktor) mit einer Dosierstelle für Katalysator am Anfang des Reaktors und einem Gesamtvolumen von 80 1. |
| Nachträgliche | |
| Phasentrennung: | Trenngefäß (Größe 4,15 m³ bei einem Stand von 50%) |

Im Verfahrensschritt (a) wurden folgende Stoffströme eingesetzt:
600 kg/h wässrige BPA-Lösung (15 Gew.-% BPA, bezogen auf Gesamtgewicht der Lösung, 2.13 mol NaOH / mol BPA)
44,6 kg/h Phosgen
520 kg/h Lösungsmittelgemisch aus 54 Gew.-% Methylenchlorid und 46 Gew.-% Chlorbenzol

In Verfahrensschritt (b) und (c) wurden keine weiteren Stoffströme zusätzlich eingesetzt.

In Verfahrensschritt (d) wurden am ersten Verweilreaktor folgende Stoffströme zusätzlich eingesetzt:
17,8 kg/h t-Butylphenollösung (20 Gew.-%, in Lösungsmittelgemisch aus 54 Gew.-% Methylenchlorid und 46 Gew.-% Chlorbenzol)
35 kg/h wässrige NaOH-Lösung mit 32 Gew.-% NaOH

In Verfahrensschritt (d) wurden im zweiten Verweilreaktor folgender Stoffstrom zusätzlich eingesetzt:
22,7 kg/h Katalysatorlösung (3 Gew.-%ige Lösung, Ethylpipiridin in Lösungsmittelgemisch aus 54 Gew.-% Methylenchlorid und 46 Gew.-% Chlorbenzol.

Die Temperatur im Umpumpreaktor betrug zwischen 35°C (nach dem Wärmetauscher) und 38°C (vor dem Wärmetauscher). Die Temperatur in den Schlangenrohrreaktoren in Verfahrensschritt (d) betrug jeweils 37°C und im Trenngefäß 35°C.

Die Dispergierrichtung war so eingestellt, dass die organische Phase in die wässrige Phase dispergiert wurde.

Es wurde mit einem Phosgenüberschuss von 8,7 mol-% gearbeitet. Nach der Phasentrennung wurden folgende Werte ermittelt (jeweils Mittelwert aus 3 Wiederholungsexperimenten):

| | | |
|---|---|---|
| BPA im Abwasser | 1 | ppm |
| Wassergehalt in der organischen Phase nach Absetzen | 0,98 | Gew.-% |
| Eingebauter Stickstoff im Produkt | < 2 | ppm |

Der geringe Wassergehalt in der organischen Phase sowie der geringe Restmonomergehalt BPA im Abwasser zeigten eine hervorragende Qualität der Phasentrennung. Zudem zeigte die Dispersion ein gutes und stabiles Trennverhalten. Es wurden keinen nennenswerten Nebenreaktionen festgestellt (kein eingebauter Stickstoff).

### Beispiel 2 (Vergleichsbeispiel):

Es wurde apparativ wie unter Beispiel 1 gearbeitet mit dem Unterschied der Erhöhung der Reaktionstemperatur.

Im Verfahrensschritt (a) wurden folgende Stoffströme eingesetzt:
600 kg/h wässrige BPA-Lösung (15 Gew.-% BPA bezogen auf Gesamtgewicht der Lösung, 2.13 mol NaOH / mol BPA)
44,6 kg/h Phosgen
500 kg/h Lösungsmittelgemisch aus 54 Gew.-% Methylenchlorid und 46 Gew.-% Chlorbenzol

In Verfahrensschritt (b) und (c) wurden keine weiteren Stoffströme zusätzlich eingesetzt.

In Verfahrensschritt (d) wurden am ersten Verweilreaktor folgende Stoffströme zusätzlich eingesetzt:
17,8 kg/h t-Butylphenollösung (20 Gew.-%, in Lösungsmittelgemisch aus 54 Gew.-% Methylenchlorid und 46 Gew.-% Chlorbenzol)
33 kg/h wässrige NaOH-Lösung mit 32 Gew.-% NaOH

In Verfahrensschritt (d) wurde am zweiten Verweilreaktor folgender Stoffstrom zusätzlich eingesetzt:
23 kg/h Katalysatorlösung (3 Gew.-%ige Lösung, Ethylpipiridin in Lösungsmittelgemisch aus 54 Gew.-% Methylenchlorid und 46 Gew.-% Chlorbenzol

Die Temperatur im Umpumpreaktor betrug zwischen 55°C (nach dem Wärmetauscher) und 57°C (vor dem Wärmetauscher). Die Temperatur in beiden Schlangenrohrreaktoren in Verfahrensschritt (d) betrug jeweils 55°Cund im Trenngefäß 35°C.

Es wurde mit einem Phosgenüberschuss von 8,9 Mol.-% gearbeitet. Nach der Phasentrennung wurden folgende Werte ermittelt (jeweils Mittelwert aus 3 Wiederholungsexperimenten):

| | | |
|---|---|---|
| BPA im Abwasser | 16 | ppm |
| Wassergehalt in der organischen Phase nach Absetzen | 2,2 | Gew.-% |
| Eingebaute Stickstoff im Produkt | 27 | ppm |

Trotz des höheren Restmonomergehalt BPA im Abwasser und insgesamt instabilerem

Reaktionsverhalten (Abweichungen zwischen den Wiederholungsprüfungen waren größer) wurde mit einem immer noch sehr niedriger Wassergehalt in der organischen Phase eine qualitativ gute Phasentrennung beobachtet. Zudem zeigte die Dispersion ein gutes und stabiles Trennverhalten. Der Anteil der Nebenreaktionen war aber deutlich größer geworden, nachgewiesen durch die Anwesenheit von bis zu 30 ppm in die Polymerkette eingebauten Stickstoff.

### Beispiel 3 (nicht erfindungsgemäß):

Es wurde apparativ wie unter Beispiel 1 gearbeitet mit dem Unterschied, dass im Umpumpreaktor nicht gekühlt wurde, sondern die Emulsion erst in den Verfahrensschritte (d), d.h. vor der Zugabe des Katalysators gekühlt wurde.

Im Verfahrensschritt (a) wurden folgende Stoffströme eingesetzt:
600 kg/h wässrige BPA-Lösung (14,88 Gew.-% BPA bezogen auf Gesamtgewicht der Lösung, 2.14 mol NaOH / mol BPA)
44,7 kg/h Phosgen
500 kg/h Lösungsmittelgemisch aus 52 Gew.-% Methylenchlorid und 48 Gew.-% Chlorbenzol

In Verfahrensschritt (b) und (c) wurden keine weiteren Stoffströme zusätzlich eingesetzt.

In Verfahrensschritt (d) wurden am ersten Verweilreaktor folgende Stoffströme zusätzlich eingesetzt:
17,6 kg/h t-Butylphenollösung (20 Gew.-%, in Lösungsmittelgemisch aus 52 Gew.-% Methylenchlorid und 48 Gew.-% Chlorbenzol)
33 kg/h wässrige NaOH-Lösung mit 32 Gew.-% NaOH

In Verfahrensschritt (d) wurde am zweiten Verweilreaktor folgender Stoffstrom zusätzlich eingesetzt:
24 kg/h Katalysatorlösung (3 Gew.-%ige Lösung Ethylpipiridin in Lösungsmittelgemisch aus 52 Gew.-% Methylenchlorid und 48 Gew.-% Chlorbenzol)

Die Temperatur im Umpumpreaktor betrug zwischen 55°C (nach dem Wärmetauscher) und 58°C (vor dem Wärmetauscher). Die Temperatur im ersten Schlangenrohrreaktor in Verfahrensschritt (d) betrug 55°C, im zweiten Schlangenrohrreaktor in Verfahrensschritt (d) 36°C und im Trenngefäß 35°C.

Es wurde mit einem Phosgenüberschuss von 9.1 Mol.-% gearbeitet. Nach der Phasentrennung wurden folgende Werte ermittelt (jeweils Mittelwert aus 3 Wiederholungsexperimenten):

| | | |
|---|---|---|
| BPA im Abwasser | 4 | ppm |
| Wassergehalt in der organischen Phase nach Absetzen | 1,7 | Gew.-% |
| Eingebaute Stickstoff im Produkt | <2 | ppm |

Sowohl der Restmonomergehalt BPA im Abwasser als auch der Wassergehalt in der organischen Phase waren ähnlich wie in Beispiel 1. Bei der Phasentrennung wurden keinen Instabilitäten beim Trennen beobachtet. Es wurden keinen nennenswerten Nebenreaktionen festgestellt (kein eingebauter Stickstoff).

### Beispiele 4-8 (nicht erfindungsgemäß):

Zur Verfolgung der Wirkung des Dispergierers sowie des Ablaufes der Phosgenierung gemäß den zuvor beschriebenen Temperatur- und pH-Bedingungen und Ort der Zugabestellen wurden weitere Versuche in mehrere großtechnische Anlagen mit angepasster Lochdüsen (erfindungsgemäß ausgelegt) durchgeführt, und sowohl der Prozessstabilität als der Produktqualität beobachtet.

Als wässrige Phase für die Beispiele 4 - 7 wurde eine 15 Gew.-% wässrige BPA-Lösung (bezogen auf Gesamtgewicht der Lösung) verwendet mit einem Molverhältnis NaOH / BPA von 2,14. Als Lösungsmittel für die organische Phase wurde ein Gemisch aus 50 Gew.-% Methylenchlorid und 50 Gew.-% Chlorbenzol verwendet, dem verschiedene Mengen Phosgen zugegeben wurden. Die Reaktionspartner wurden in der zuvor beschriebenen Düse dispergiert, wobei die Dispergierrichtung und damit die Voreinstellung der Dispersion Öl-in-Wasser war. Der Druckabfall über der Düse betrug während der Versuche etwa 1,2 bar. Reaktionstemperatur und pH wurden eingestellt auf den erfindungsgemäß bevorzugten Bereich mittels eines Kühlers in der Umpumpschleife des Schrittes (c) (Temperatur in Schritt (c) 36 °C, am Ende des Schritts (d) angestiegen bis auf 42 °C), und mit Hilfe einer passenden NaOH-Dosierung (Einstellung auf einen pH von circa 11,5). Zwecks Vergleichbarkeit der Versuche auf großtechnischen Anlagen unterschiedlicher Größen werden die Dosiermengen pro 10.000 kg Bisphenolatlösung angegeben.

In der technische Anlage wurde mit den folgenden Lösungen gearbeitet:
wässrige Bisphenolatlösung (15 Gew.-% BPA bezogen auf Gesamtgewicht der Lösung, 2,14 mol Natronlauge / mol BPA);
32 Gew-% wässrige NaOH Lösung;
25 Gew-% Phenollösung in Lösemittelgemisch aus 50 Gew.-% Methylenchlorid und 50 Gew.-% Chlorbenzol als Kettenabbrecher,
oder 20 Gew-% t-Butylphenollösung in Lösemittelgemisch aus 50 Gew.-% Methylenchlorid und 50 Gew.-% Chlorbenzol als alternativen Kettenabbrecher; und
als Katalysatorlösung: 7,5 Gew-% Ethylpipiridin in Lösungsmittelgemisch aus 50 Gew.-% Methylenchlorid und 50 Gew.-% Chlorbenzol.

### Beispiel 4:

In Beispiel 4 wurden pro 10.000 kg Bisphenollatlösung die folgenden Ströme zudosiert:
Im Verfahrensschritt (a) wurden die folgenden Stoffströme eingesetzt (Konzentrationen wie oben beschrieben):
   10.000 kg BPA-Lösung (gemessener Gehalt an BPA 15,15 Gew.-%)
   8100 kg Lösemittelgemisch
   745 kg Phosgen
In Verfahrensschritt (b) und (c) wurden keine weiteren Stoffströme zusätzlich eingesetzt und die Verweilzeit in Schritt (b) betrug zwischen 0,1 und 0,2 Sekunden.
In Verfahrensschritt (d) wurden folgende Stoffströme zusätzlich eingesetzt am ersten Verweilreaktor:
   218 kg t-Butylphenollösung
   335 kg wässrige NaOH-Lösung (32 Gew.-%)
In Verfahrensschritt (d) wurden folgender Stoffstrom zusätzlich eingesetzt am zweiten Verweilreaktor:
   197 kg Ethylpiperidinlösung.

Es wurde mit einem Phosgenüberschuss von 11,1 Mol.-% gearbeitet. Nach der Phasentrennung wurden folgende Werte ermittelt:

| | | |
|---|---|---|
| BPA im Abwasser | 15 | ppm |
| Wassergehalt in der organischen Phase nach Absetzen | 1,9 | Gew.-% |
| Eingebauter Stickstoff im Produkt | < 2 | ppm |

### Beispiel 5 mit hohem Phosgenüberschuss und Phenol als Kettenabbrecher (Vergleichsbeispiel):

In Beispiel 5 wurden pro 10.000 kg Bisphenollatlösung die folgenden Ströme zudosiert:
Im Verfahrensschritt (a) wurden folgende Stoffströme eingesetzt (Konzentrationen wie oben beschrieben):
   10.000 kg BPA-Lösung (gemessener Gehalt an BPA 15,00 Gew.-%)
   8500 kg Lösemittelgemisch
   768 kg Phosgen
In Verfahrensschritt (b) wurden keine weiteren Stoffströme zusätzlich eingesetzt und die Verweilzeit in Schritt (b) betrug zwischen 0,1 und 0,2 Sekunden..
In Verfahrensschritt (c) wurde folgender Stoffstrom zusätzlich eingesetzt:
   114 kg wässrige NaOH Lösung (32 Gew.-%)
In Verfahrensschritt (d) wurden folgende Stoffströme zusätzlich eingesetzt am ersten Verweilreaktor:
   96 kg Phenollösung
   331 kg wässrige NaOH Lösung (32 Gew.-%)
In Verfahrensschritt (d) wurde folgender Stoffstrom zusätzlich eingesetzt am zweiten Verweilreaktor:
   159 kg Ethylpiperidinlösung.

Es wurde mit einem Phosgenüberschuss von 15,9 Mol.-% gearbeitet. Nach der Phasentrennung wurden folgende Werte ermittelt:

| | | |
|---|---|---|
| BPA und Phenol im Abwasser | 140 | ppm |
| Wassergehalt in der organischen Phase nach Absetzen | 0,6 | Gew.-% |
| Eingebaute Stickstoff im Produkt | <2 | ppm |

### Beispiel 6:

In Beispiel 6 wurden pro 10.000 kg Bisphenollatlösung die folgenden Ströme zudosiert:
Im Verfahrensschritt (a) wurden folgende Stoffströme eingesetzt (Konzentrationen wie zuvor beschrieben):
   10.000 kg BPA-Lösung (gemessener Gehalt an BPA: 15,05 Gew.-%)
   8200 kg Lösemittelgemisch
   751 kg Phosgen
In Verfahrensschritt (b) und (c) wurden keine weiteren Stoffströme zusätzlich eingesetzt und die Verweilzeit in Schritt (b) betrug zwischen 0,1 und 0,2 Sekunden..
In Verfahrensschritt (d) wurden folgende Stoffströme zusätzlich eingesetzt am ersten Verweilreaktor:
   99 kg Phenollösung
   369 kg wässrige NaOH Lösung (32 Gew.-%)
In Verfahrensschritt (d) wurde folgender Stoffstrom zusätzlich eingesetzt am zweiten Verweilreaktor:
   208 kg Ethylpiperidinlösung.

Es wurde mit einem Phosgenüberschuss von 13,0 Mol.-% gearbeitet. Nach der Phasentrennung wurden folgende Werte ermittelt:

| | | |
|---|---|---|
| BPA und Phenol im Abwasser | 140 | ppm |
| Wassergehalt in der organischen Phase nach Absetzen | 1,7 | Gew.-% |
| Eingebaute Stickstoff im Produkt | <2 | ppm |

### Beispiel 7:

In Beispiel 7 wurden pro 10'000 kg Bisphenollatlösung die folgenden Ströme zudosiert:
Im Verfahrensschritt (a) wurden folgende Stoffströme eingesetzt (Konzentrationen wie zuvor beschrieben):
   10.000 kg BPA-Lösung (gemessener Gehalt an BPA: 14,98 Gew.-%)
   8000 kg Lösemittelgemisch
   745 kg Phosgen
In Verfahrensschritt (b) und (c) wurden keine weiteren Stoffströme zusätzlich eingesetzt und die Verweilzeit in Schritt (b) betrug zwischen 0,1 und 0,2 Sekunden.
In Verfahrensschritt (d) wurden folgender Stoffstrom zusätzlich eingesetzt am ersten Verweilreaktor:
   289 kg t-Butylphenollösung
   335 kg wässrige NaOH-Lösung (32 Gew.-%)
In Verfahrensschritt (d) wurde folgender Stoffstrom zusätzliche eingesetzt am zweiten Verweilreaktor:
   188 kg Ethylpiperidinlösung.

Es wurde mit einem Phosgenüberschuss von 11,5 Mol.-% gearbeitet. Nach der Phasentrennung wurden folgende Werte ermittelt:

| | | |
|---|---|---|
| BPA im Abwasser | 30 | ppm |
| Wassergehalt in der organischen Phase nach Absetzen | 1,6 | Gew.-% |
| Eingebaute Stickstoff im Produkt | <2 | ppm |

### Beispiel 8 (Vergleichsbeispiel):

In Beispiel 8 wurde in eine zweite großtechnische Anlage ein erfindungsgemäßer Dispergator eingebaut, und Reaktionstemperatur und pH eingestellt, mittels eines Kühlers in der Umpumpschleife des Schrittes (c) (Temperatur in Schritt (b) 42 °C, am Ende des Schrittes (d) angestiegen bis auf 54 °C), und einer passenden NaOH-Dosierung (Einstellung auf einen pH von circa 11,5).

In diesem Beispiel wurden pro 10'000 kg Bisphenollatlösung die folgenden Ströme zudosiert:
Im Verfahrensschritt (a) wurden folgende Stoffströme eingesetzt (Konzentrationen wie zuvor beschrieben):
   10.000 kg BPA-lösung (gemessener Gehalt an BPA: 15,4 Gew-% und 2,10 mol NaOH pro mol BPA)
   8000 kg Lösemittelgemisch (aus 50 Gew.-% Methylenchlorid und 50 Gew.-% Chlorbenzol)
   760 kg Phosgen
In Verfahrensschritt (b) und (c) wurden keine weiteren Stoffströme zusätzlich eingesetzt und die Verweilzeit in Schritt (b) betrug zwischen 0,1 und 0,2 Sekunden.
In Verfahrensschritt (d) wurden folgende Stoffströme zusätzlich eingesetzt am ersten Verweilreaktor:
   57 kg t-Butylphenollösung (14,29 Gew-% in Lösemittelgemisch aus 50 Gew.-% Methylenchlorid und 50 Gew.-% Chlorbenzol)
   409 kg wässrige NaOH-Lösung (32 Gew-% NaOH)
In Verfahrensschritt (d) wurde folgender Stoffstrom zusätzliche eingesetzt am zweiten Verweilreaktor:
   243 kg Ethylpiperidinlösung (2.5 Gew-% in Lösemittelgemisch aus 50 Gew.-% Methylenchlorid und 50 Gew.-% Chlorbenzol).

Es wurde mit einem Phosgenüberschuss von 10,8 Mol.-% gearbeitet. Nach der Phasentrennung wurden folgende Werte ermittelt:

| | | |
|---|---|---|
| BPA im Abwasser | 28 | ppm |
| Wassergehalt in der organischen Phase nach Absetzen | 2,2 | Gew.-% |
| Eingebaute Stickstoff im Produkt | 8 | ppm |

Sofort merkbar ist, dass dieses Beispiel zwar sehr stabil den Produktionsprozess durchläuft, aber durch nicht erfindungsgemäßes Einstellen der Temperatur steigt der Anteil der Nebenreaktionen, der sich durch einen erhöhten Stickstoffeinbau im Produkt bemerkbar macht.

## Patentansprüche

1. Verfahren zur kontinuierlichen Herstellung von Polycarbonaten mit gewichtsmittleren Molekulargewichten M_{w} von 15000 - 200000 g/mol, gemessen durch Gelpermeationschromotographie in Methylenchlorid als Eluens und unter Verwendung von BPA-Homopolycarbonat-Standard mit einem Mw von 31.000 g/mol, nach dem Phasengrenzflächenverfahrens aus wenigstens einem Dihydroxydiarylalkan, Phosgen und wenigstens einem Katalysator gegebenenfalls in Gegenwart wenigstens eines Kettenabbrechers und/oder Verzweigers, wobei
(a) eine Mischung aus einer organischen und einer wässrigen Phase erzeugt wird, indem in einem Dispergator kontinuierlich die organische Phase in die wässrige Phase oder die wässrige Phase in die organische Phase dispergiert wird, wobei die organische Phase wenigstens ein für das Polycarbonat geeignetes Lösungsmittel und zumindest einen Teil des Phosgens enthält und die wässrige Phase das oder die Dihydroxydiarylalkan(e), Wasser und 2,00 bis 2,05 Mol Alkalilauge pro Mol Dihydroxydiarylalkan(e) enthält,
(b) anschließend die Mischung in einem Reaktor mit einer Verweilzeit von weniger als 0,5 s umgesetzt wird,
(c) anschließend die Reaktionsmischung gegebenenfalls unter Zugabe von Kettenabbrecher(n) in einem Umpumpreaktor mit einer Umpumprate von 5 bis 15 mal der Durchströmungsmenge redispergiert wird und weiterreagiert, und
(d) anschließend weitere Aufkondensation durch Zugabe weiterer Alkalilauge, Kettenabbrecher(n) und wenigstens eines Katalysators in wenigstens einem weiteren Reaktor erfolgt,
wobei in Schritt (d) die Reaktionstemperatur höchstens 45 °C beträgt und die wässrige Phase auf einen pH-Wert zwischen 11,3 und 11,8 eingestellt wird,
und wobei in den Schritten (b) und (c) keine Alkalilauge zugegeben wird.

2. Verfahren gemäß Anspruch 1, **dadurch gekennzeichnet, dass** in Schritt (d) die Einstellung des pH-Werts vor Zugabe des Katalysators erfolgt und die Schritte (a) bis (c) in Abwesenheit eines Katalysators durchgeführt werden.

3. Verfahren gemäß Anspruch 1 oder 2, **dadurch gekennzeichnet, dass** die Reaktionstemperatur in Schritt (d) bei Katalysatorzugabe 35 °C bis 45 °C beträgt.

4. Verfahren gemäß einem der Ansprüche 1 bis 3, **dadurch gekennzeichnet, dass** die wässrige Phase in Schritt (d) auf einen pH von 11,3 bis 11,6 eingestellt wird.

5. Verfahren gemäß einem der Ansprüche 1 bis 4, **dadurch gekennzeichnet, dass** die Verweilzeit der Reaktionsmischung in dem Reaktor des Schrittes (c) 2 bis 20 Minuten beträgt.

6. Verfahren gemäß einem der Ansprüche 1 bis 5, **dadurch gekennzeichnet, dass** die Verweilzeit der Reaktionsmischung in dem einen oder mehreren Reaktor(en) des Schrittes (d) (jeweils) 2 bis 20 Minuten beträgt.

7. Verfahren gemäß einem der Ansprüche 1 bis 6, **dadurch gekennzeichnet, dass** der eingesetzte Überschuss an Phosgen bezogen auf die Summe der eingesetzten Dihydroxydiarylalkane höchstens 11 Mol.-% beträgt.

8. Verfahren gemäß einem der Ansprüche 1 bis 7, **dadurch gekennzeichnet, dass** als Dihydroxydiarylalkan(e) 4,4'-Dihydroxydiphenyl, 1,1 -Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und/oder 1,1-Bis-(4-hydroxyphenyl)-3,3,5-trimethylcyclohexan eingesetzt werden.

9. Verfahren gemäß einem der Ansprüche 1 bis 8, **dadurch gekennzeichnet, dass** Phenol als Kettenabbrecher eingesetzt wird.

10. Verfahren gemäß Anspruch 9, **dadurch gekennzeichnet, dass** in Schritt (d) eine Lösung umfassend wenigstens ein organisches Lösungsmittel und das Phenol in einer Konzentration von 5 bis 40 Gew.-% eingesetzt wird.

11. Verfahren gemäß Anspruch 9 oder 10, wobei die wässrige Phase am Ende der Reaktion auf einen pH Wert von 11,3 bis 11,6 eingestellt ist.

12. Verfahren gemäß wenigstens einem der Ansprüche 1 bis 8, **dadurch gekennzeichnet, dass** in Schritt (d) eine Lösung umfassend wenigstens ein organisches Lösungsmittel und als Kettenabbrecher p-tert-Butylphenol in einer Konzentration von 2 bis 25 Gew.-% eingesetzt wird.

13. Verfahren gemäß Anspruch 12, wobei die wässrige Phase am Ende der Reaktion auf einen pH Wert von 11,5 bis 11,8 eingestellt ist.

## Claims

1. Process for continuous production of polycarbonates with weight-average molecular weights Mw of 15000-200 000 g/mol measured by gel permeation chromatography in methylene chloride as eluent and using BPA homopolycarbonates standard having an Mw of 31 000 g/mol by the interfacial process from at least one dihydroxydiarylalkane, phosgene and at least one catalyst optionally in the presence of at least one chain terminator and/or branching agent, wherein
a) a mixture of an organic and an aqueous phase is produced by continuously dispersing the organic phase in the aqueous phase or the aqueous phase and the organic phase in a disperser, wherein the organic phase comprises at least one solvent suitable for the polycarbonate and at least a portion of the phosgene and the aqueous phase contains the dihydroxydiarylalkane(s), water and 2.00 to 2.05 mol of alkali metal hydroxide solution per mol of dihydroxydiarylalkane(s),
b) the mixture is subsequently reacted in a reactor with a residence time of less than 0.5 seconds,
c) the reaction mixture is subsequently redispersed optionally with addition of chain terminator(s) in a pumped circulation reactor with a pumped circulation rate of 5 to 15 times the throughput and reacted further and
d) further condensation is then effected by addition of further alkali metal hydroxide solution, chain terminator (s) and at least one catalyst in at least one further reactor,
wherein in step (d) the reaction temperature is not more than 45°C and the aqueous phase is pH-adjusted to a pH between 11.3 and 11.8,
and wherein no alkali metal hydroxide solution is added in steps (b) and (c).

2. Process according to Claim 1, **characterized in that** in step (d) the pH-adjusting is carried out before addition of the catalyst and the steps (a) to (c) are performed in the absence of a catalyst.

3. Process according to Claim 1 or 2, **characterized in that** the reaction temperature in step (d) during catalyst addition is 35°C to 45°C.

4. Process according to any of Claims 1 to 3, **characterized in that** the aqueous phase in step (d) is adjusted to a pH of 11.3 to 11.6.

5. Process according to any of Claims 1 to 4, **characterized in that** the residence time of the reaction mixture in the reactor of step (c) is 2 to 20 minutes.

6. Process according to any of Claims 1 to 5, **characterized in that** the residence time of the reaction mixture in the one or more reactor (s) of step (d) is (in each case) 2 to 20 minutes.

7. Process according to any of Claims 1 to 6, **characterized in that** the employed excess of phosgene based on the sum of the employed dihydroxydiarylalkanes is not more than 11 mol%.

8. Process according to any of Claims 1 to 7, **characterized in that** the dihydroxydiarylalkane(s) employed are 4,4'-dihydroxydiphenyl, 1,1-bis(4-hydroxyphenyl)phenylethane, 2,2-bis(4-hydroxyphenyl)propane, 2,2-bis(3,5-dimethyl-4-hydroxyphenyl)propane, 1,1-bis(4-hydroxyphenyl)cyclohexane and/or 1,1-bis(4-hydroxyphenyl)-3,3,5-trimethylcyclohexane.

9. Process according to any of Claims 1 to 8, **characterized in that** phenol is employed as chain terminator.

10. Process according to Claim 9, **characterized in that** a solution comprising at least one organic solvent and the phenol in a concentration of 5% of the 40% by weight is employed in step (d).

11. Process according to Claim 9 or 10, wherein at the end of the reaction the aqueous phase has been pH-adjusted to a pH of 11.3 to 11.6.

12. Process according to any of Claims 1 to 8, **characterized in that** a solution comprising at least one organic solvent and p-tert-butylphenol as chain terminator in a concentration of 2% to 25% by weight is employed in step (d).

13. Process according to Claim 12, wherein at the end of the reaction the aqueous phase has been pH-adjusted to a pH of 11.5 to 11.8.

## Revendications

1. Procédé pour la production continue de polycarbonates ayant des masses moléculaires moyennes en poids M_{w} de 15 000 - 200 000 g/mole, mesurées par chromatographie par perméation de gel dans du chlorure de méthylène en tant qu'éluant et avec utilisation d'étalon homopolycarbonate de BPA ayant une Mw de 31 000 g/mole, selon le procédé interfacial à partir d'au moins un dihydroxydiarylalcane, de phosgène et d'au moins un catalyseur, éventuellement en présence d'au moins un agent d'interruption de chaîne et/ou agent de ramification, dans lequel
(a) on produit un mélange d'une phase organique et d'une phase aqueuse en dispersant dans un appareil de dispersion en continu la phase organique dans la phase aqueuse ou la phase aqueuse dans la phase organique, la phase organique contenant au moins un solvant approprié pour le polycarbonate et au moins une partie du phosgène et la phase aqueuse contenant le ou les dihydroxydiarylalcane(s), de l'eau et 2,00 à 2,05 moles de lessive alcaline par mole de dihydroxydiarylalcane(s),
(b) on fait ensuite réagir le mélange dans un réacteur pendant un temps de séjour de moins de 0,5 s,
(c) ensuite on redisperse et on continue à faire réagir le mélange réactionnel éventuellement avec addition d'agent(s) d'interruption de chaîne dans un réacteur à recyclage à un taux de recyclage de 5 à 15 fois la quantité de courant le traversant, et
(d) une nouvelle condensation ayant ensuite lieu par addition de lessive alcaline supplémentaire, d'agent(s) d'interruption de chaîne supplémentaire(s) et d'au moins un catalyseur dans au moins un autre réacteur,
dans l'étape (d) la température de réaction étant d'au maximum 45 °C et la phase aqueuse étant ajustée à un pH compris entre 11,3 et 11,8,
et aucune lessive alcaline n'étant ajoutée dans les étapes (b) et (c).

2. Procédé selon la revendication 1, **caractérisé en ce que** dans l'étape (d) l'ajustement du pH s'effectue par addition du catalyseur et on effectue les étapes (s) à (c) en absence d'un catalyseur.

3. Procédé selon la revendication 1 ou 2, **caractérisé en ce que** dans l'étape (d) la température de réaction est de 35 °C à 45 °C lors de l'addition du catalyseur.

4. Procédé selon l'une quelconque des revendications 1 à 3, **caractérisé en ce que** dans l'étape (d) on ajuste la phase aqueuse à un pH de 11,3 à 11,6.

5. Procédé selon l'une quelconque des revendications 1 à 4, **caractérisé en ce que** le temps de séjour du mélange réactionnel dans le réacteur de l'étape (c) est de 2 à 20 minutes.

6. Procédé selon l'une quelconque des revendications 1 à 5, **caractérisé en ce que** le temps de séjour du mélange réactionnel dans ledit un ou lesdits plusieurs réacteur (s) de l'étape (d) est (chaque fois) de 2 à 20 minutes.

7. Procédé selon l'une quelconque des revendications 1 à 6, **caractérisé en ce que** l'excès utilisé de phosgène, par rapport à la somme des dihydroxydiaryl-alcanes utilisés, est d'au maximum 11 % en moles.

8. Procédé selon l'une quelconque des revendications 1 à 7, **caractérisé en ce qu'**en tant que dihydroxydiarylalcane(s) on utilise du 4,4'-dihydroxydiphényle, du 1,1-bis-(4-hydroxyphényl)-phényléthane, du 2,2-bis-(4-hydroxyphényl)-propane, du 2,2-bis(3,5-diméthyl-4-hydroxyphényl)-propane, du 1,1-bis-(4-hydroxyphényl)-cyclohexane et/ou du 1,1-bis-(4-hydroxyphényl)-3,3,5-triméthylcyclohexane.

9. Procédé selon l'une quelconque des revendications 1 à 8, **caractérisé en ce qu'**en tant qu'agent d'interruption de chaîne on utilise du phénol.

10. Procédé selon la revendication 9, **caractérisé en ce que** dans l'étape (d) on utilise une solution comprenant au moins un solvant organique et le phénol à une concentration de 5 à 40 % en poids.

11. Procédé selon la revendication 9 ou 10, **caractérisé en ce qu'**à la fin de la réaction on ajuste la phase aqueuse à un pH de 11,3 à 11,6.

12. Procédé selon au moins l'une quelconque des revendications 1 à 8, **caractérisé en ce que** dans l'étape (d) on utilise une solution comprenant au moins un solvant organique et en tant qu'agent d'interruption de chaîne du p-tert-butylphénol à une concentration de 2 à 25 % en poids.

13. Procédé selon la revendication 12, **caractérisé en ce qu'**à la fin de la réaction on ajuste la phase aqueuse à un pH de 11,5 à 11,8.
